(19) Europäisches Patentamt / European Patent Office / Office européen des brevets

(11) **EP 4 401 457 A1**

(12) **EUROPEAN PATENT APPLICATION**
published in accordance with Art. 153(4) EPC

(43) Date of publication:
**17.07.2024 Bulletin 2024/29**

(51) International Patent Classification (IPC):
**H04W 24/02** (2009.01)

(21) Application number: **22874712.7**

(86) International application number:
**PCT/CN2022/119965**

(22) Date of filing: **20.09.2022**

(87) International publication number:
**WO 2023/051325 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202111161581**

(71) Applicant: **Huawei Technologies Co., Ltd.**
**Shenzhen, Guangdong 518129 (CN)**

(72) Inventors:
• **HE, Weidong**
**Shenzhen, Guangdong 518129 (CN)**
• **HAO, Bo**
**Shenzhen, Guangdong 518129 (CN)**
• **ZHANG, Li**
**Shenzhen, Guangdong 518129 (CN)**
• **YANG, Yubo**
**Shenzhen, Guangdong 518129 (CN)**
• **LIU, Pan**
**Shenzhen, Guangdong 518129 (CN)**

(74) Representative: **Maiwald GmbH**
**Engineering**
**Elisenhof**
**Elisenstrasse 3**
**80335 München (DE)**

(54) **RADIO RESOURCE MEASUREMENT METHOD AND APPARATUS**

(57) This application provides a radio resource measurement method and apparatus. The method includes: determining frequency domain resources of a narrowband on which an RSS pilot is located, where the RSS pilot occupies a part of the frequency domain resources of the narrowband; and determining, based on the frequency domain resource of the narrowband, a first radio resource measurement result corresponding to the RSS pilot. According to the method, UE can determine, based on the frequency domain resource of the narrowband occupied by the RSS pilot, the first radio resource measurement result corresponding to the RSS pilot. This can improve accuracy of RSS pilot-based measurement.

S101: UE determines a frequency domain resource of a narrowband on which a resynchronization signal RSS pilot is located

S102: The UE determines, based on the frequency domain resource of the narrowband, a first radio resource measurement result corresponding to the RSS pilot

FIG. 4

## Description

## CROSS-REFERENCE TO RELATED APPLICATIONS

This application claims priority to Chinese Patent Application No. 202111161581.3, filed with the China National Intellectual Property Administration on September 30, 2021 and entitled "RADIO RESOURCE MEASUREMENT METHOD AND APPARATUS", which is incorporated herein by reference in its entirety.

## TECHNICAL FIELD

This application relates to the field of mobile communication technologies, and in particular, to a radio resource measurement method and apparatus.

## BACKGROUND

Currently, a resynchronization signal (resynchronization signal, RSS) pilot is introduced in the R15 standard of enhanced machine-type communication (enhanced machine-type communication, eMTC)-4, to shorten resynchronization time. The RSS pilot occupies some frequency domain resources on a narrowband (narrowband, NB).

In the R16 standard, an RSS is used for radio resource management (radio resource management, RRM) measurement, to improve RRM measurement performance. The RRM measurement includes but is not limited to measurement of reference signal received power (reference signal received power, RSRP) and reference signal received quality (reference signal received quality, RSRQ). However, currently a specific implementation of determining RRM based on an RSS pilot is not specified in the conventional technology, and consequently measurement accuracy is reduced.

## SUMMARY

This application provides a radio resource measurement method and apparatus, to improve accuracy of RSS pilot-based measurement.

According to a first aspect, this application provides a radio resource measurement method, and the method may be implemented by a terminal apparatus. For example, the terminal apparatus is UE. For example, UE is an entity for executing the method. The method may include: The UE determines frequency domain resources of a narrowband on which an RSS pilot is located, where the RSS pilot occupies a part of the frequency domain resources of the narrowband; and the UE determines, based on the frequency domain resources of the narrowband, a first radio resource measurement result corresponding to the RSS pilot.

According to the method, the UE can determine, based on the frequency domain resource of the narrowband occupied by the RSS pilot, the first radio resource measurement result corresponding to the RSS pilot. This can improve accuracy of RSS pilot-based measurement.

In a possible design, the radio resource measurement result includes RSRQ and/or an RS-SINR. This design can improve accuracy of the RSRQ and/or the RS-SINR measured based on the RSS pilot.

In a possible design, the first radio resource measurement result includes RSRQ, and the UE may further determine a received signal strength indicator RSSI based on the frequency domain resources of the narrowband, and determine the RSRQ based on the RSSI. According to this design, the UE can determine the RSRQ based on a time domain resource of the RSS pilot and the frequency domain resource of the narrowband, so that a measurement result of the RSRQ meets a load of a serving cell of the UE. This can improve RSRQ measurement accuracy.

In a possible design, the UE may specifically determine the RSSI based on the frequency domain resource of the narrowband and the time domain resource of the RSS pilot, and determine the RSRQ based on reference signal received power RSRP and the RSSI that correspond to the RSS pilot, where the RSRP is determined based on the time domain resource of the RSS pilot.

In a possible design, the UE may specifically determine at least one time domain sub-resource based on the time domain resource of the RSS pilot, and determine the RSSI based on the frequency domain resource of the narrowband and the time domain sub-resource. According to this design, the UE can sample the time domain resource occupied by the RSS pilot, and determine the RSSI by using the time domain sub-resource obtained through sampling, to reduce processing overheads in a measurement process.

In a possible design, the first radio resource measurement result includes the RS-SINR, and the UE may determine the RS-SINR based on noise intensity and interference intensity in the frequency domain resource of the narrowband on which the RSS pilot is located. According to this design, the UE can determine the RS-SINR based on the noise intensity and the interference intensity in the frequency domain resource of the narrowband on which the RSS pilot is located, so that a measurement result of the RS-SINR meets interference of a serving cell of the UE. This can improve RS-SINR measurement accuracy.

In a possible design, the narrowband includes at least one first time unit, the first time unit is not used to send downlink data, and the first time unit is used to determine the noise intensity and the interference intensity. According to this design, the UE can determine, in the first time unit, the noise intensity and the interference intensity in the frequency domain resource of the narrowband on which the RSS pilot is located, to improve RSSI measurement accuracy.

In a possible design, the UE may determine the first radio resource measurement result at a physical layer based on the frequency domain resource of the narrowband, and the UE may further determine a second radio resource measurement result based on a power difference between the RSS pilot and a cell-specific reference signal CRS pilot, and the first radio resource measurement result, and may send the second radio resource measurement result from the physical layer to layer 3 (or referred to as a higher layer, an RRC layer).

According to this design, the UE may convert the radio resource measurement result measured based on the RSS pilot, so that a measurement result reported by the physical layer to a higher layer is converted to a CRS antenna connector reference point. This can avoid that the higher layer evaluates, according to an evaluation standard of a radio resource measurement result corresponding to the CRS pilot, the radio resource measurement result determined by the physical layer based on the RSS pilot, improve reliability of radio resource measurement, and avoid complex processing of radio resource measurement by the higher layer. Avoiding complexity means that the higher layer does not need to know whether the physical layer determines the radio resource measurement result based on the RSS pilot or the CRS pilot.

According to a second aspect, this application provides a radio resource measurement apparatus. The apparatus may be configured to implement a function implemented by UE according to any one of the first aspect or the possible designs of the first aspect. The function may be implemented by hardware, or may be implemented by hardware executing corresponding software. The apparatus includes a corresponding unit or component configured to perform the foregoing method. For example, the apparatus may be the UE.

In a possible design, the radio resource measurement apparatus may include a frequency domain resource determining module and a measurement result determining module. The frequency domain resource determining module may be configured to determine frequency domain resources of a narrowband on which a resynchronization signal RSS pilot is located, where the RSS pilot occupies a part of the frequency domain resources of the narrowband. The measurement result determining module may be configured to determine, based on the frequency domain resource of the narrowband, a first radio resource measurement result corresponding to the RSS pilot.

In a possible design, the radio resource measurement result includes RSRQ and/or an RS-SINR.

In a possible design, the first radio resource measurement result includes RSRQ, and the measurement result may be used to determine an RSSI based on the frequency domain resource of the narrowband, and determine the RSRQ based on the RSSI.

In a possible design, the measurement result determining module may be configured to: determine the RSSI based on the frequency domain resource of the narrowband and a time domain resource of the RSS pilot,

and determine the RSRQ based on reference signal received power RSRP and the RSSI that correspond to the RSS pilot, where the RSRP is determined based on the time domain resource of the RSS pilot.

In a possible design, the measurement result determining module may be configured to: determine at least one time domain sub-resource based on the time domain resource of the RSS pilot, and determine the RSSI based on the frequency domain resource of the narrowband and the time domain sub-resource.

In a possible design, the first radio resource measurement result includes the RS-SINR, and the measurement result determining module may be configured to determine the RS-SINR based on noise intensity and interference intensity in the frequency domain resource of the narrowband on which the RSS pilot is located.

In a possible design, the narrowband includes at least one first time unit, the first time unit is not used to send downlink data, and the first time unit is used to determine the noise intensity and the interference intensity.

In a possible design, the measurement result determining module may be configured to determine the first radio resource measurement result at a physical layer based on the frequency domain resource of the narrowband, and the measurement result determining module may be further configured to: determine a second radio resource measurement result based on a power difference between the RSS pilot and a cell-specific reference signal CRS pilot, and the first radio resource measurement result, and send the second radio resource measurement result to layer 3.

In another possible design, the communication apparatus may include a transceiver, a memory, and a processor. The transceiver is configured to perform communication by the communication apparatus. The memory stores a computer program. The processor is configured to run the computer program, to implement the function implemented by the UE according to any one of the first aspect or the possible designs of the first aspect.

According to a third aspect, an embodiment of this application provides a computer-readable storage medium, including a program instruction. When the program instruction is run on a computer, the computer is enabled to perform the method implemented by UE according to any one of the first aspect or the possible designs of the first aspect.

According to a fourth aspect, an embodiment of this application provides a computer program product. When the computer program product runs on a computer, the computer is enabled to perform the method implemented by UE according to any one of the first aspect or the possible designs of the first aspect.

According to a fifth aspect, an embodiment of this application provides a chip. The chip may be coupled to a memory, and may be configured to execute a program instruction in the memory, to perform the method according to any one of the first aspect and the possible designs of the first aspect in embodiments of this application. "Coupling" means that two components are directly or indirectly combined with each other. For example, coupling may mean that the two components are electrically connected.

For technical effect brought by the second aspect to the fifth aspect, refer to the description of the first aspect. Details are not described herein again.

## BRIEF DESCRIPTION OF DRAWINGS

FIG. 1 is a schematic diagram of an architecture of a wireless communication system according to this application;

FIG. 2 is a schematic diagram of an architecture of a terminal apparatus according to this application;

FIG. 3 is a schematic diagram of resource distribution of an RSS pilot according to this application;

FIG. 4 is a schematic flowchart of a radio resource measurement method according to this application;

FIG. 5 is another schematic diagram of resource distribution of an RSS pilot according to this application;

FIG. 6 is a schematic diagram of a structure of a radio resource measurement apparatus according to this application; and

FIG. 7 is a schematic diagram of a structure of a radio resource measurement apparatus according to this application.

## DESCRIPTION OF EMBODIMENTS

The following further describes in detail this application with reference to accompanying drawings.

Embodiments of this application provide an uplink resource determining and configuration method and apparatus, to reduce power consumption of UE during small data transmission. The method and apparatus in this application are based on a same technical concept. Because problem resolution principles of the method and the apparatus are similar, mutual reference may be made between implementations of the apparatus and the method, and repeated parts are not described again.

In the descriptions of this application, words such as "first" and "second" are only intended for differentiated description, and shall not be understood as an indication or implication of relative importance or an indication or implication of a sequence.

In the descriptions of this application, "at least one" means one or more, and "a plurality of" means two or more.

To describe the technical solutions in embodiments of this application more clearly, the following describes the communication method and apparatus according to embodiments of this application in detail with reference to the accompanying drawings.

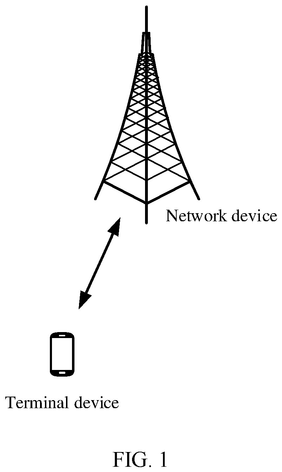

FIG. 1 shows an architecture of a communication system to which a communication method according to an embodiment of this application is applicable. The architecture of the communication system includes a network device and a terminal device.

The network device may be a device with a wireless transceiver function or a chip disposed in the network device. The network device may include but is not limited to a gNodeB (generation NodeB, gNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, or a transmission point (transmission and reception point, TRP, or transmission point, TP), or may be a network node that constitutes a gNB or a transmission point, such as a baseband unit (BBU) or a distributed unit (distributed unit, DU).

In some deployments, a gNB may include a central unit (central unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical layer (physical layer, PHY). Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

In this application, the network device supports communication with a terminal apparatus. Specifically, the network device may communicate with the UE through a universal user-to-network (universal user-to-network, Uu) interface, for example, configure an uplink resource of the UE through the Uu interface.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in a transportation safety (transportation safety), a wireless terminal in a smart city (smart city), a smart wearable device (smart glasses, a smartwatch, a smart headset, or the like), a wireless terminal in a smart home (smart home), or the like; or may be a chip, a chip module (or a chip system), or the like that can be disposed in the foregoing device. An application scenario is not limited in embodiments of this application. In this application, a terminal device with a wireless transceiver function and a chip disposed in the terminal device are collectively referred to as a terminal device.

It should be noted that the communication system shown in FIG. 1 may be but is not limited to a 4th generation (4th generation, 4G) system or a 5th generation (5th generation, 5G) system, such as a new generation radio access technology (new radio access technology, NR) or standalone (standalone, SA) networking. Optionally, the method in embodiments of this application is further applicable to various future communication systems, for example, a 6th generation (6th generation, 6G) system or another communication network.

In this application, the terminal device supports communication with the network device. Specifically, the network device may communicate with the network device through the Uu interface, for example, receive configuration information of an uplink resource from the network device through the Uu interface, and/or send uplink data to the network device through the Uu interface.

In the wireless communication system, the base station may provide communication coverage for a specific geographical area by using an integrated or external antenna device. One or more terminals in a communication coverage area of the base station may be connected to the base station. One base station may manage one or more cells (cells). Each cell has one identity (identity). The identity is also referred to as a cell identity (cell identity, cell ID). From a perspective of a radio resource, a cell is a combination of a downlink radio resource and an uplink radio resource (optional) that is paired with the downlink radio resource.

In this application, the terminal device and the base station need to learn of configurations predefined by the wireless communication system, including a radio access technology (radio access technology, RAT) supported by the system and a radio resource configuration specified by the system, for example, a basic configuration of a radio band and a carrier. A carrier is a frequency range that complies with a specification of the system. The frequency range may be determined jointly based on a center frequency of the carrier (defined as a carrier frequency) and a bandwidth of the carrier. The configurations predefined by the system may be used as a part of a standard protocol for the wireless communication system, or may be determined through interaction between the terminal and the base station. Content of a related standard protocol may be prestored in memories of the terminal device and the base station, or embodied as hardware circuits or software code of the terminal device and the base station.

In the wireless communication system, the terminal device and the base station each support one or more same RATs, for example, 5G NR, 4G, long term evolution (long term evolution, LTE), or a RAT for a future evolved system. Specifically, the terminal device and the base station use a same air interface parameter, coding scheme, modulation scheme, and the like, and communicate with each other based on a radio resource specified by the system.

It should be noted that the device shown in FIG. 1 is only an example, and the communication system may further include another device in addition to the network device and the terminal device. This is not limited in this application. A quantity of network devices and a quantity of terminal devices are only examples. There may be a plurality of network devices and a plurality of terminal devices in the communication system. This is not limited in this application.

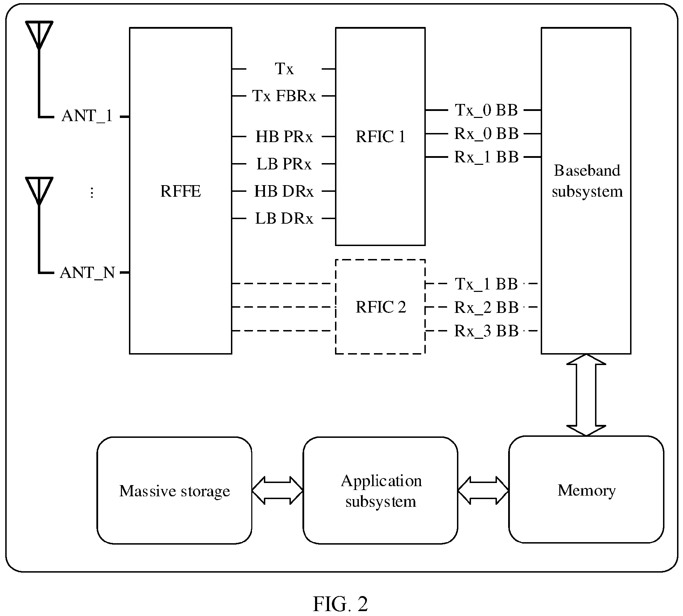

FIG. 2 is a schematic diagram of a structure of a wireless communication device according to an embodiment of this application. The wireless communication device may be the terminal or the base station in embodiments of this application. As shown in FIG. 2, the wireless communication device may include a plurality of assemblies, for example, an application subsystem, a memory (memory), a mass storage (massive storage), a baseband subsystem, a radio frequency integrated circuit (radio frequency integrated circuit, RFIC) (UE may include at least one RFIC, and if two RFICs are included, the two RFICs may be respectively represented as an RFIC 1 and an RFIC 2 in FIG. 2), a radio frequency front-end (radio frequency front-end, RFFE) device, and an antenna (antenna, ANT). These assemblies may be coupled through various interconnection buses or in other electrical connection manners.

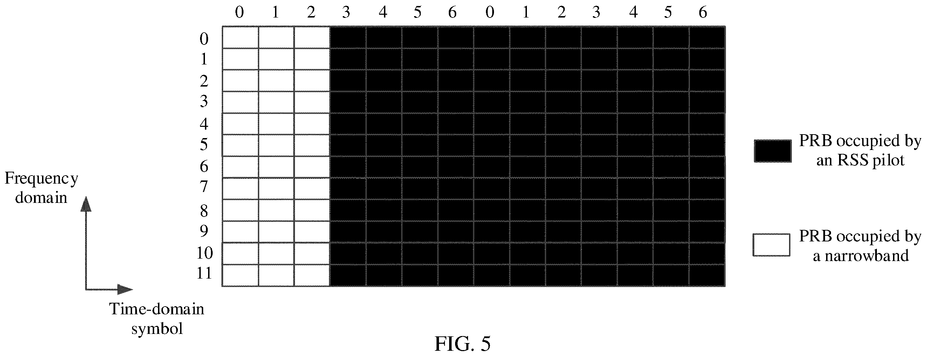

In FIG. 2, ANT_1 represents a first antenna, ANT_N represents an $N^{th}$ antenna, and N is a positive integer greater than 1. Tx represents a transmitting path, and Rx represents a receiving path. Different numbers represent different paths. Each path may represent a signal processing channel. FBRx represents a feedback receiving path, PRx represents a primary receiving path, and DRx represents a diversity receiving path. HB represents a high frequency, and LB represents a low frequency. The high frequency and the low frequency herein are relative high and low frequencies, and a frequency of HB is higher than that of LB. BB represents a baseband. It should be understood that signs and assemblies in FIG. 5 are only used for illustration, and only used as a possible implementation. This embodiment of this application further includes another implementation. For example, the wireless communication device may include more or fewer paths, and include more or fewer assemblies.

The application subsystem may be used as a main control system or a main computing system of the wireless communication device, and is configured to: run a main operating system and an application program, manage software and hardware resources of the entire wireless communication device, and provide a user operation interface for a user. In addition, the application subsystem may further include driver software related to another subsystem (for example, the baseband subsystem).

The application subsystem may include one or more processors. A plurality of processors may be a plurality of processors of a same type, or may include a combination of a plurality of types of processors. In this application, the processor may be a processor for a general purpose, or may be a processor designed for a specific field. For example, the processor may be a central processing unit (central processing unit, CPU), a digital signal processor (digital signal processor, DSP), or a micro control unit (micro control unit, MCU). Alternatively, the processor may be a graphics processing unit (graphics processing unit, GPU), an image signal processor (image signal processor, ISP), an audio signal processor (audio signal processor, ASP), or an AI processor specially designed for an artificial intelligence (artificial intelligence, AI) application. The AI processor includes but is not limited to a neural-network processing unit (neural-network processing unit, NPU), a tensor processing unit (tensor processing unit, TPU), and a processor referred to as an AI engine.

In FIG. 2, a radio frequency integrated circuit (including an RFIC 1, and one or more optional RFICs 2) and a radio frequency front-end device may jointly form a radio frequency subsystem. According to different signal receiving or transmitting paths, the radio frequency subsystem may also be classified into a radio frequency receive channel (RF receive path) and a radio frequency transmit channel (RF transmit path). The radio frequency receive channel may receive a radio frequency signal by using an antenna, perform processing (for example, amplification, filtering, and down-conversion) on the radio frequency signal to obtain a baseband signal, and transfer the baseband signal to the baseband subsystem. The radio frequency transmit channel may receive a baseband signal from the baseband subsystem, perform processing (such as up-conversion, amplification, and filtering) on the baseband signal to obtain a radio frequency signal, and finally radiate the radio frequency signal into space by using an antenna. The radio frequency integrated circuit may be referred to as a radio frequency processing chip or a radio frequency chip.

Specifically, the radio frequency subsystem may include electronic devices such as an antenna switch, an antenna tuner, a low noise amplifier (low noise amplifier, LNA), a power amplifier (power amplifier, PA), a frequency mixer (mixer), a local oscillator (local oscillator, LO), and a filter (filter). The electronic devices may be integrated into one or more chips based on a requirement. The radio frequency integrated circuit may be referred to as a radio frequency processing chip or a radio frequency chip. The radio frequency front-end device may also be an independent chip. The radio frequency chip is sometimes referred to as a receiver (receiver), a transmitter (transmitter), or a transceiver (transceiver). As technologies evolve, an antenna may sometimes be considered as a part of a radio frequency subsystem, and may be integrated into a chip of the radio frequency subsystem. The antenna, the radio frequency front-end device, and radio frequency chip can be manufactured and sold separately. Certainly, the radio frequency subsystem may use different devices or different integration manners based on requirements for power consumption and performance. For example, some devices belonging to the radio frequency front-end are integrated into the radio frequency chip, or even both of the antenna and the radio frequency front-end device are integrated into the radio frequency chip, and the radio frequency chip may alternatively be referred to as a radio frequency antenna module or an antenna module.

The baseband subsystem processes a baseband signal, and a function of the baseband subsystem is similar to a function of the radio frequency subsystem, that is, processes a radio frequency signal. The baseband subsystem may extract useful information or data bits from the baseband signal, or convert information or data bits into a to-be-sent baseband signal. The information or the data bits may be data that represents user data or control information such as a voice, a text, or video. For example, the baseband subsystem may implement modulation and demodulation, encoding and decoding, and other signal processing operations. For different radio access technologies, for example, 5G NR and 4G LTE, baseband signal processing operations are not completely the same.

In addition, because the radio frequency signal is usually an analog signal, and the baseband subsystem mainly processes a digital signal, an analog-to-digital conversion device is further required in the wireless communication device. In this embodiment of this application, the analog-to-digital conversion device may be disposed in the baseband subsystem, or may be disposed in the radio frequency subsystem. The analog-to-digital conversion device includes an analog-to-digital converter (analog-to-digital converter, ADC) that converts an analog signal into a digital signal, and a digital-to-analog converter (digital-to-analog converter, DAC) that converts a digital signal into an analog signal.

The baseband subsystem, similar to the application subsystem, may also include one or more processors. In addition, the baseband subsystem may further include one or more hardware accelerators (hardware accelerators, HACs). The hardware accelerator may be configured to specially complete some sub-functions with high processing overheads, for example, assembling and parsing a data packet (data packet), and encrypting and decrypting a data packet. The sub-functions may also be implemented by using a processor with a general function. However, due to performance or costs, it may be more proper to use the hardware accelerator to implement the sub-functions. In a specific implementation, the hardware accelerator is mainly implemented by using an application-specific integrated circuit (application-specific integrated circuit, ASIC). Certainly, the hardware accelerator may alternatively include one or more relatively simple processors, for example, an MCU.

In this embodiment of this application, the baseband subsystem and the radio frequency subsystem jointly form a communication subsystem, to provide a wireless communication function for the wireless communication device. Generally, the baseband subsystem is responsible for managing software and hardware resources of the communication subsystem, and may configure a working parameter of the radio frequency subsystem. A processor of the baseband subsystem may run a sub-operating system of the communication subsystem, and the sub-operating system is usually an embedded operating system or a real-time operating system (real-time operating system).

The baseband subsystem may be integrated into one or more chips, and the chip may be referred to as a baseband processing chip or a baseband chip. The baseband subsystem may be used as an independent chip, and the chip may be referred to as a modem (modem) or a modem chip. The baseband subsystem can be manufactured and sold in a unit of a modem chip. The modem chip is sometimes referred to as a baseband processor or a mobile processor. In addition, the baseband subsystem may be further integrated into a larger chip, and is manufactured and sold in a unit of a larger chip. The larger chip may be referred to as a system chip, a chip system, a system on a chip (system on a chip, SoC), or a SoC chip for short. Software assemblies of the baseband subsystem may be built in hardware assemblies of the chip before the chip is delivered, or may be imported from another non-volatile memory into the hardware assemblies of the chip after the chip is delivered, or the software assemblies may be downloaded and updated online through a network.

In addition, the wireless communication device further includes a memory, for example, a memory and a mass storage in FIG. 2. In addition, the application subsystem and the baseband subsystem may further include one or more caches separately. In a specific implementation, the memory may be classified into a volatile memory (volatile memory) and a non-volatile memory (nonvolatile memory, NVM). The volatile memory is a memory in which data stored in the memory is lost after a power supply is interrupted. Currently, volatile memories are mainly random access memories (random access memory, RAM), including a static random access memory (static RAM, SRAM) and a dynamic random access memory (dynamic RAM, DRAM). The non-volatile memory is a memory in which data stored in the memory is not lost even if a power supply is interrupted. Common non-volatile memories include a read-only memory (read-only memory, ROM), an optical disc, a magnetic disk, various memories based on a flash memory (flash memory) technology, and the like. Generally, a volatile memory may be used as the memory and the cache, and a non-volatile memory, for example, a flash memory, may be used as the mass storage.

The following describes a current RRM measurement process by using an example in which the network device is a base station and the terminal apparatus is UE.

For example, RRM measurement includes but is not limited to a process of determining at least one of RSRP, RSRQ, and a reference signal-signal to noise and interference ratio (reference signal-signal to noise and interference ratio, RS-SINR).

The RSRP reflects power on a reference signal resource element (resource element, RE). Specifically, the RSRP may be an average value of signal received power received on all REs that carry reference signals in a symbol (or some symbols). After an RSS pilot is introduced, the UE can use the average value of the signal received power received on the REs on which the RSS pilot is located as the RSRP, to implement RSRP measurement based on the RSS pilot.

RSRQ indicates a load of a target cell. Currently, the RSRQ is defined as follows: N × RSRP/(E-UTRA carrier RSSI), where N is a quantity of resource blocks (resource blocks, RBs) included in an E-UTRA carrier received signal strength indicator (received signal strength indicator, RSSI) measurement bandwidth, and the RSRP and the RSSI are obtained through measurement by using a bandwidth of a same physical resource block (physical resource block, PRB). The RSSI may be used to represent interference within the PRB range. That is, when the RSS pilot is introduced, the measured RSRQ reflects a load in a frequency domain resource occupied by the RSS pilot.

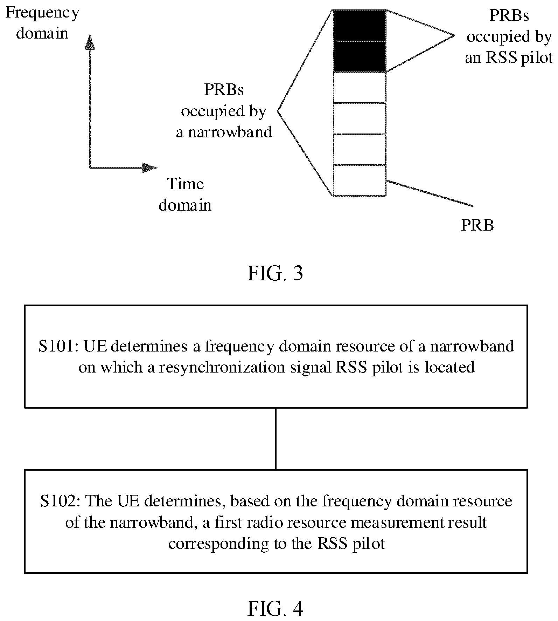

However, the RSS pilot occupies only a part (for example, only some PRBs of the narrowband) of frequency domain resources of the narrowband of the cell. For example, as shown in FIG. 3, in frequency domain, a narrowband occupies six PRBs, and an RSS pilot occupies two of the six PRBs. It should be understood that, for an LTE category (category, Cat). M1, a maximum receive bandwidth of the UE does not exceed 1.4 megahertz (MHz), and corresponds to one narrowband, and the RSS pilot may occupy some PRBs of the narrowband, for example, two PRBs. For LTE Cat. M2, a maximum receive bandwidth of the UE does not exceed 5 MHz, and corresponds to up to two narrowbands. Each narrowband may correspond to a serving cell of the UE. For each serving cell, an RSS pilot of the UE may occupy some PRBs of the narrowband. For non-BL CE UE, a maximum receive bandwidth of the UE does not exceed 20 MHz, and may correspond to up to 16 narrowbands, and an RSS pilot may occupy some PRBs.

Therefore, the RSRQ obtained through measurement in the foregoing manner cannot reflect a load in the entire narrowband, and cannot reflect a load of the entire cell. Similarly, the RS-SINR is used to represent cell channel quality within a resource range of a reference signal. After the RSS is introduced, the RS-SINR determined based on the frequency domain resource of the RSS cannot reflect interference within a frequency domain range of an entire cell. Therefore, current RSS-based RRM measurement performance needs to be improved.

To improve accuracy of RSS-based RRM measurement and improve measurement performance, embodiments of this application provide a radio resource measurement method. The following describes the method embodiments provided in embodiments of this application by using an example in which the network device is a base station and the terminal apparatus is UE. It should not be understood that embodiments of this application can be implemented only by using the base station and the UE.

As shown in FIG. 4, the radio resource measurement method provided in an embodiment of this application may include the following steps.

S101: UE determines frequency domain resources of a narrowband on which a resynchronization signal RSS pilot is located, where the RSS pilot occupies a part of the frequency domain resources of the narrowband.

The UE may determine, based on configuration information from a base station, the frequency domain resource of the narrowband on which the RSS pilot is located.

For example, the UE may receive an RSS pilot configuration and/or a narrowband configuration from the base station. For example, the base station configures the RSS pilot shown in FIG. 3 for the UE, and the RSS pilot occupies two PRBs on a narrowband. The UE may learn, based on the narrowband-related configuration and the RSS-related configuration, that the narrowband on which the RSS pilot is located occupies six PRBs. Optionally, the base station may further configure a period (period) and/or duration (duration) of the RSS pilot in time domain for the UE. For example, the RSS pilot appears at an interval of 160, 320, 640, or 1280 milliseconds (ms), and duration of each occurrence is 8, 16, 32, or 40 ms.

Similarly, the UE may further determine a time domain resource of the RSS pilot and/or a time domain resource of the narrowband based on the configuration information from the base station.

Optionally, processing in S 101 may be performed after the UE determines to perform RRM measurement. For example, when the UE has a measurement task to be completed (for example, in a reselection or handover process) at a higher layer (the higher layer in this application may alternatively be layer 3 or an RRC layer), and determines that a condition for starting RSS pilot-based RRM measurement is met, and the UE determines the frequency domain resource of the narrowband on which the resynchronization signal RSS pilot is located. For details about the conditions for starting RRM RRM measurement, refer to clauses 4.7.2.1.1 and 8.13.2.1 of 3GPP (technical specification, TS) 36.133 of (version, V) 16.7.0 regarding descriptions of the conditions that the UE is allowed to perform RSS pilot-based RSRP measurement.

S102: The UE determines, based on the frequency domain resource of the narrowband, a first radio resource measurement result corresponding to the RSS pilot.

Optionally, the first radio resource measurement result includes RSRQ and/or an RS-SINR.

Therefore, the UE can determine the RSRQ and/or the RS-SINR based on the frequency domain resource occupied by the narrowband. This can improve RRM measurement performance.

The following separately describes manners of determining the RSRQ and the RS-SINR by the UE.

For the RSRQ, the UE may determine the RSRQ based on RSRP corresponding to the RSS pilot and an RSSI corresponding to the RSS pilot.

For example, the UE may determine, based on the time domain resource occupied by the RSS pilot and the frequency domain resource, the RSRP corresponding to the RSS pilot. For example, the UE may use an average value of signal received power received on the REs on which the RSS is located as the RSRP. For example, the UE may determine the RSSI corresponding to the RSS pilot based on the frequency domain resource of the narrowband and the time domain resource occupied by the RSS pilot.

In a time domain dimension, the time domain resource occupied by the RSS pilot may include a part of the frequency domain resources of the narrowband. As shown in FIG. 5, if the RSS pilot occupies 11 symbols in time domain, the UE determines the RSSI based on a radio signal received in the 11 symbols.

In a frequency domain dimension, as shown in FIG. 3, if the RSS pilot occupies only two of six PRBs of the narrowband, the UE may determine the RSSI based on a radio signal received in the PRBs, namely, the six PRBs, of the narrowband. That is, the UE collects statistics on the RSSI within a maximum receive bandwidth of the RSS pilot in frequency domain.

Optionally, in the process of determining the RSSI, the UE may also sample, in the subframe, a symbol occupied by the RSS pilot, and determine the RSSI based on a time domain sub-resource range obtained through sampling. For example, the UE may determine at least one time domain sub-resource from the time domain resource occupied by the RSS pilot, and determine the RSSI based on the time domain sub-resource and the frequency domain resource of a narrowband, to improve RSSI determining efficiency. An example in which the RSS pilot occupies the 11 symbols is still used, and the UE may select the fourth, the seventh, and the eleventh symbols from the 11 symbols as time domain sub-resources, to determine the RSSI. Therefore, processing overheads in a measurement process can be reduced.

It should be understood that, after determining the RSRP and the RSSI, the UE may determine the RSRQ according to the following formula:

$$RSRQ = N \times RSRP/RSSI; \text{(formula 1)}$$

N is a quantity of PRBs included in RSSI measurement. FIG. 3 is used as an example. In RSSI measurement, measurement values in the six PRBs on which a narrowband is located are counted. In this case, N=6.

In the foregoing manner, the RSRQ determined in this application can reflect a load in a cell.

For the RS-SINR, the UE may determine the RS-SINR based on noise intensity and interference intensity in the frequency domain resource of the narrowband on which the RSS pilot is located. For example, as shown in FIG. 3, the UE determines the RS-SINR based on the noise intensity and the interference intensity in the six PRBs of the narrowband. In addition, that the UE supports monitoring on only one narrowband is not limited in this application. If the UE supports a plurality of narrowbands, the UE may determine the RS-SINR based on noise intensity and interference intensity in PRBs of the plurality of narrowbands.

Specifically, RS-SINR is a ratio of signal strength of a reference signal to energy of noise and interference. In this application, the signal strength is signal strength in a frequency domain resource range occupied by the RSS pilot, and the energy of noise and interference may be a sum of noise energy and interference energy detected in all PRBs that may be included in the frequency domain resource of the narrowband.

In this application, to measure noise energy and interference energy in all PRBs included in the frequency domain resource of the narrowband, the base station may not send downlink data in a first time unit in the time domain resource of the narrowband, so that the UE performs noise and interference measurement in all PRBs of the narrowband in the first time unit. For example, the base station may not send a downlink signal in a specific period, and a resource for not sending a signal is used by the UE to measure noise energy and interference energy. For example, a serving cell of the UE is configured to send a downlink signal based on a bitmap. The bitmap represented as mute_pattern is equal to [1 1 1 1 1 1 1 1 1 1 1 1 1 1 1 0], and means that a PDSCH of a downlink service is not sent on the last subframe (that is, a subframe corresponding to a bit with a value of 0) in every 16 subframes. Some symbols in the subframe may be used to send a cell-specific reference signal (cell-specific reference signal, CRS) pilot, and the UE may perform interference intensity and noise intensity measurement on a symbol that does not include a CRS pilot in the last subframe.

In the foregoing manner, the RS-SINR determined in this application can better reflect downlink service channel quality of the cell.

In this application, after determining the first radio resource measurement result at the physical layer based on the RSS, the UE may convert the first radio resource measurement result into a second radio resource measurement result based on power of the RSS pilot and power of the CRS pilot, and then send the second radio resource measurement result to a higher layer. The second radio resource measurement result may include at least one of RSRP, RSRQ, and RS-SINR. Because a current serving cell of the UE meets the condition for starting RSS measurement, but a neighboring cell does not necessarily meet the condition, a radio measurement result in the measured neighboring cell may still be obtained based on a CRS pilot. A power difference between the RSS pilot and the cell-specific reference signal CRS pilot causes a deviation between the two radio resource measurement results, and the higher layer of the UE cannot learn a manner based on which the radio measurement result is determined, resulting in a deviation in higher layer filtering, and affecting evaluation of the radio resource measurement result by the higher layer. However, due to this step, before reporting the radio resource measurement result determined based on the RSS pilot to the higher layer, the UE may convert the measurement result to a CRS antenna connector reference point. This can avoid that the higher layer evaluates, according to an evaluation standard of a radio resource measurement result corresponding to the CRS pilot, the radio resource measurement result determined by the physical layer based on the RSS pilot, improve reliability of radio resource measurement, and avoid complex processing of radio resource measurement by the higher layer.

For example, the UE may determine the second radio measurement result based on the power of the RSS pilot, the power of the CRS pilot, and the first radio measurement result. For example, if the UE knows that the power of the RSS pilot is 6 decibels (dB) higher than the power of the CRS pilot, the conversion method is: The UE obtains a converted result by first subtracting 6 dB from the RSRP obtained through RSS-measurement, and then reports the converted result as the RSRP included in the radio resource measurement result to the higher layer.

For another example, the UE obtains a calculation result by first subtracting 6 dB from the RSRP obtained through RSS measurement, substitutes the calculation result into the RSRP in the foregoing formula 1, calculates the RSRQ according to the formula 1, and reports the determined RSRQ as the second radio resource measurement result to the higher layer.

For another example, based on the method described above, the UE obtains an RS-SINR through RSS measurement, subtracts 6 dB from the RS-SINR, and reports a calculation result as the second radio resource measurement result to the higher layer. Correspondingly, the higher layer performs a corresponding evaluation operation based on the second radio measurement result. For example, the evaluation operation may be that the higher layer determines whether to initiate cell reselection or cell handover.

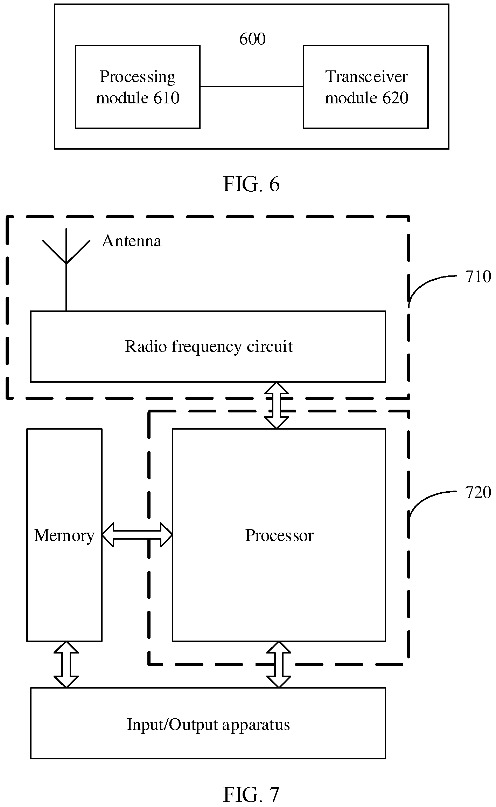

Based on a same technical concept, an embodiment of this application further provides a communication apparatus, configured to implement the foregoing functions implemented by a first terminal apparatus and/or a second terminal apparatus. The apparatus may include the structure shown in FIG. 6 and FIG. 7.

As shown in FIG. 6, the apparatus may include a transceiver module 620 and a processing module 610. The transceiver module 620 may include a receiving module and/or a sending module, and implement information receiving and/or sending. The processing module 610 may be configured to generate information sent by the transceiver module 620, or process information received by the transceiver module 620. The processing module 610 may also be configured to perform actions other than receiving and sending in the foregoing method embodiments. The apparatus 600 is applied to the foregoing UE. The UE is applicable to the communication system shown in FIG. 1, and may implement the radio resource measurement methods in the foregoing figures.

For example, the processing module 610 may include a frequency domain resource determining module and a measurement result determining module.

The frequency domain resource determining module may be configured to determine frequency domain resources of a narrowband on which a resynchronization signal RSS pilot is located, where the RSS pilot occupies a part of the frequency domain resources of the narrowband. For example, the frequency domain resource determining module may determine, based on the configuration information received by the transceiver module 620 from a base station, the frequency domain resource of the narrowband on which the RSS pilot is located. The measurement result determining module may be configured to determine, based on the frequency domain resource of the narrowband, a first radio resource measurement result corresponding to the RSS pilot.

In a possible design, the radio resource measurement result includes RSRQ and/or an RS-SINR.

In a possible design, the first radio resource measurement result includes RSRQ, and the measurement result may be used to determine an RSSI based on the frequency domain resource of the narrowband, and determine the RSRQ based on the RSSI.

In a possible design, the measurement result determining module may be configured to: determine the RSSI based on the frequency domain resource of the narrowband and a time domain resource of the RSS pilot, and determine the RSRQ based on reference signal received power RSRP and the RSSI that correspond to the RSS pilot, where the RSRP is determined based on the time domain resource of the RSS pilot.

In a possible design, the measurement result determining module may be configured to: determine at least one time domain sub-resource based on the time domain resource of the RSS pilot, and determine the RSSI based on the frequency domain resource of the narrowband and the time domain sub-resource.

In a possible design, the first radio resource measurement result includes the RS-SINR, and the measurement result determining module may be configured to determine the RS-SINR based on noise intensity and interference intensity in the frequency domain resource of the narrowband on which the RSS pilot is located.

In a possible design, the narrowband includes at least one first time unit, the first time unit is not used to send downlink data, and the first time unit is used to determine the noise intensity and the interference intensity.

In a possible design, the measurement result determining module may be configured to determine the first radio resource measurement result at a physical layer based on the frequency domain resource of the narrowband, and the measurement result determining module may be further configured to: determine a second radio resource measurement result based on a power difference between the RSS pilot and a cell-specific reference signal CRS pilot, and the first radio resource measurement result, and send the second radio resource measurement result to layer 3.

In addition, the processing module 610 may also implement functions of the frequency domain resource determining module and the measurement result determining module.

FIG. 7 is a schematic diagram of a structure of another radio resource measurement apparatus. The apparatus is configured to perform actions performed by UE according to an embodiment of this application, for ease of understanding and illustration. As shown in FIG. 7, the radio resource measurement apparatus may include a processor, a memory, a radio frequency circuit, an antenna, and/or an input/output apparatus. The processor is mainly configured to: process a communication protocol and communication data, control a radio resource measurement apparatus, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of radio resource measurement apparatuses may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the radio resource measurement apparatus, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 7 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit. The transceiver unit may be a functional unit, and the functional unit can implement a sending function and a receiving function. Alternatively, the transceiver unit may include two functional units: a receiving unit that can implement a receiving function and a sending unit that can implement a sending function. A processor with a processing function may be considered as a processing unit. As shown in FIG. 7, the radio resource measurement apparatus includes a transceiver unit 710 and a processing unit 720. The transceiver unit may also be referred to as a transceiver, a transceiver device, a transceiver apparatus, or the like. The processing unit may also be referred to as a processor, a processing board, a processing module, a processing apparatus, or the like. Optionally, a device that is in the transceiver unit 710 and that is configured to implement a receiving function may be considered as a receiving unit, and a device that is in the transceiver unit 710 and that is configured to implement a sending function may be considered as a sending unit. That is, the transceiver unit 710 includes the receiving unit and the sending unit. The transceiver unit sometimes may also be referred to as a transceiver, a transceiver device, a transceiver circuit, or the like. The receiving unit sometimes may also be referred to as a receiver, a receiver device, a receive circuit, or the like. The sending unit sometimes may also be referred to as a transmitter, a transmitter device, a transmit circuit, or the like.

It should be understood that the transceiver unit 710 may correspond to the transceiver module 620, or the transceiver module 620 may be implemented by the transceiver unit 710. The transceiver unit 710 is configured to perform a sending operation and a receiving operation of the UE in the embodiments shown in this application, and/or is configured to support another process of the technology described in this specification. The processing unit 720 may correspond to the processing module 610, or the processing module 610 may be implemented by the processing unit 720. The processing unit 720 is configured to perform other operations of the UE in the embodiments shown in this application other than a receiving and sending operation.

When the UE provided in this embodiment of this application is implemented by using the structure shown in FIG. 7, the actions performed by the processing module 610 in the foregoing example may be performed by the processing unit 720 shown in FIG. 7. Specific actions are not described again. Similarly, the foregoing actions of the second communication apparatus performed by the transceiver module 620 may be performed by the transceiver unit 710 shown in FIG. 7.

In addition, the radio resource measurement apparatus provided in embodiments of this application may further have a structure shown in FIG. 2. In this case, the application subsystem shown in FIG. 2 may implement the processing actions of the UE in the radio resource measurement method provided in this embodiment of this application. For example, the processing module 610 is implemented by one or more processors in the application subsystem. In addition, the transceiver module 620 may be implemented by at least one assembly in the ANT, the RFFE, the RFIC, and the baseband subsystem.

It should be understood that, for details of terms and possible implementations in the apparatus embodiments, refer to the descriptions or explanations in the foregoing method embodiments. Details are not described herein again.

An embodiment of this application further provides a computer-readable storage medium. The computer-readable storage medium is configured to store a computer program. When the computer program is executed by a computer, the computer may implement a procedure related to the UE in the embodiment shown in FIG. 4 provided in the method embodiments.

An embodiment of this application further provides a computer program product. The computer program product is configured to store a computer program. When the computer program is executed by a computer, the computer may implement a procedure related to the UE in the embodiment shown in FIG. 4 provided in the method embodiments.

Embodiments of this application further provide a chip or a chip system (or a circuit). The chip may include a processor. The processor may be configured to invoke a program or instructions in a memory, to perform the procedure related to the UE in the embodiment shown in FIG. 4 provided in the foregoing method embodiment.

The chip system may include the chip, and may further include another assembly such as a memory or a transceiver.

It should be noted that the communication apparatus in the foregoing embodiments may be a terminal device, or may be a chip used in a terminal device, or another combined device, component, or the like that can implement a function of the foregoing terminal device. When the communication apparatus is the terminal device, the transceiver unit may be a transmitter and a receiver, or an integrated transceiver, and may include an antenna, a radio frequency circuit, and the like. The processing unit may be a processor, for example, a baseband chip. When the communication apparatus is the component that has functions of the terminal device, the transceiver unit may be the radio frequency unit, and the processing unit may be the processor. When the communication apparatus is a chip system, the transceiver unit may be an input/output interface of the chip system, and the processing unit may be a processor of the chip system, for example, a central processing unit (central processing unit, CPU).

It may be understood that, the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor, or any regular processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a first terminal apparatus and/or a second terminal apparatus. The processor and the storage medium may alternatively exist as discrete assemblies in the network device or the terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs and instructions. When the computer programs or the instructions are loaded and executed on a computer, all or some of the procedures or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. In the text descriptions of this application, the character "/" indicates an "or" relationship between the associated objects. In a formula in this application, the character "/" indicates a "division" relationship between the associated objects.

In embodiments of this application, the term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following" or similar expressions refer to any combination of these items, including any combination of single items or a plurality of items. For example, at least one of a, b, or c may indicate a, b, c, a and b, a and c, b and c, or a, b, and c, where a, b, and c may be singular or plural.

It may be understood that various numbers in embodiments of this application are only used for differentiation for ease of description, and are not used to limit the scope of embodiments of this application. The sequence numbers of the foregoing processes do not mean execution sequences, and the execution sequences of the processes should be determined based on functions and internal logic of the processes.

All or some of the foregoing embodiments may be implemented by using software, hardware (for example, circuit), firmware, or any combination thereof. When software is used to implement the embodiments, all or some of the embodiments may be implemented in a form of a computer program product. The computer program product includes one or more computer instructions or computer programs. When the program instructions or the computer programs are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Embodiments of the present invention is described with reference to the flowcharts and/or block diagrams of the method, the device (system), and the computer program product according to embodiments of the present invention. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Apparently, a person skilled in the art can make various modifications and variations to embodiments of the present invention without departing from the spirit and scope of this application. This application is intended to cover these modifications and variations to embodiments of the present invention provided that they fall within the scope defined by the following claims of this application and their equivalent technologies.

## Claims

1. A radio resource measurement method, comprising:

   determining a first frequency domain resource occupied by a resynchronization signal RSS pilot, wherein the first frequency domain resource is a part of frequency domain resources of a narrowband on which the RSS pilot is located; and determining, based on the first frequency domain resource, a first radio resource measurement result corresponding to the RSS pilot.

2. The method according to claim 1, wherein before the determining a first frequency domain resource occupied by an RSS pilot, the method further comprises: determining the frequency domain resource of the narrowband.

3. The method according to claim 1 or 2, wherein the first radio resource measurement result comprises reference signal received quality RSRQ and/or reference signal received power RSRP.

4. The method according to any one of claims 1 to 3, wherein the method further comprises:

   determining a received signal strength indicator RSSI based on the frequency domain resource of the narrowband; and determining the RSRQ based on the RSSI.

5. The method according to claim 4, wherein the determining an RSSI based on the frequency domain resource of the narrowband comprises:

determining the RSSI based on the frequency domain resource of the narrowband and a time domain resource of the RSS pilot; and determining the RSRQ based on the RSRP and the RSSI that correspond to the RSS pilot, wherein the RSRP is determined based on the time domain resource of the RSS pilot.

6. The method according to claim 5, wherein the determining the RSSI based on the frequency domain resource of the narrowband and a time domain resource of the RSS pilot comprises:

determining at least one time domain sub-resource based on the time domain resource of the RSS pilot; and
determining the RSSI based on the frequency domain resource of the narrowband and the time domain sub-resource.

7. The method according to any one of claims 1 to 6, wherein the method further comprises:
determining a reference signal-signal to noise and interference ratio RS-SINR based on noise intensity and interference intensity in the frequency domain resource of the narrowband on which the RSS pilot is located.

8. The method according to claim 7, wherein the narrowband comprises at least one first time unit, the first time unit is not used to send downlink data, and the first time unit is used to determine the noise intensity and the interference intensity.

9. The method according to any one of claims 1 to 8, wherein the first radio resource measurement result is determined at a physical layer.

10. The method according to any one of claims 1 to 9, wherein the method further comprises:
compensating the first radio resource measurement result based on a power difference between the RSS pilot and a cell-specific reference signal CRS pilot, to obtain a second radio resource measurement result.

11. The method according to claim 10, wherein the method further comprises:
sending the second radio resource measurement result to a higher layer.

12. A radio resource measurement apparatus, comprising:

a frequency domain resource determining module, configured to determine a first frequency domain resource occupied by an RSS pilot, wherein the first frequency domain resource is a part of frequency domain resources of a narrowband on which the RSS pilot is located; and
a measurement result determining module, configured to determine, based on the first frequency domain resource, a first radio resource measurement result corresponding to the RSS pilot.

13. The apparatus according to claim 12, wherein before determining the first frequency domain resource occupied by the RSS pilot, the method further comprises:
determining the frequency domain resource of the narrowband.

14. The apparatus according to claim 12 or 13, wherein the first radio resource measurement result comprises RSRQ and/or RSRP.

15. The apparatus according to any one of claims 12 to 14, wherein the measurement result determining module is further configured to:

determine an RSSI based on the frequency domain resource of the narrowband; and
determine the RSRQ based on the RSSI.

16. The apparatus according to claim 15, wherein the measurement result determining module is specifically configured to:

determine the RSSI based on the frequency domain resource of the narrowband and a time domain resource of the RSS pilot; and
determine the RSRQ based on the RSRP and the RSSI that correspond to the RSS pilot, wherein the RSRP is determined based on the time domain resource of the RSS pilot.

17. The apparatus according to claim 16, wherein the measurement result determining module is specifically configured to:

determine at least one time domain sub-resource based on the time domain resource of the RSS pilot; and
determine the RSSI based on the frequency domain resource of the narrowband and the time domain sub-resource.

18. The apparatus according to any one of claims 12 to 17, wherein the measurement result determining module is further configured to:
determine an RS-SINR based on noise intensity and interference intensity in the frequency domain resource of the narrowband on which the RSS pilot is located.

19. The apparatus according to claim 18, wherein the narrowband comprises at least one first time unit, the first time unit is not used to send downlink data, and the first time unit is used to determine the noise intensity and the interference intensity.

20. The apparatus according to any one of claims 12 to 19, wherein the first radio resource measurement result is determined at a physical layer.

21. The apparatus according to any one of claims 12 to 20, wherein the measurement result determining module is further configured to:
compensate the first radio resource measurement result based on a power difference between the RSS pilot and a cell-specific reference signal CRS pilot, to obtain a second radio resource measurement result.

22. The apparatus according to claim 21, wherein the measurement result determining module is specifically configured to:
send the second radio resource measurement result to a higher layer.

23. A radio resource measurement apparatus, comprising a processor, configured to execute a computer program or instructions stored in a memory, wherein when the computer program or the instructions is/are executed, the apparatus is enabled to implement the method according to any one of claims 1 to 11.

24. The apparatus according to claim 23, further comprising the memory and/or an interface circuit.

25. A computer-readable storage medium, wherein the computer storage medium stores a computer program, and when the computer program is executed by a computer, the computer is enabled to perform the method according to any one of claims 1 to 11.

26. A computer program product, wherein the computer program product stores computer-readable instructions, and when the computer-readable instructions are run, the method according to any one of claims 1 to 11 is performed.

27. A chip, wherein the chip comprises at least one processor, and the processor is configured to perform the method according to any one of claims 1 to 11.

Network device

Terminal device

FIG. 1

FIG. 2

Frequency domain

PRBs occupied by an RSS pilot

PRBs occupied by a narrowband

Time domain

PRB

FIG. 3

S101: UE determines a frequency domain resource of a narrowband on which a resynchronization signal RSS pilot is located

S102: The UE determines, based on the frequency domain resource of the narrowband, a first radio resource measurement result corresponding to the RSS pilot

FIG. 4

Frequency
domain

Time-domain
symbol

| PRB occupied by an RSS pilot |
| PRB occupied by a narrowband |

FIG. 5

600

| Processing module 610 |—| Transceiver module 620 |

FIG. 6

Antenna

710

Radio frequency circuit

720

Memory ⟺ Processor

Input/Output apparatus

FIG. 7

## INTERNATIONAL SEARCH REPORT

| | International application No. |
|---|---|
| | **PCT/CN2022/119965** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 重同步信号, RSS, re-synchronization signal, RSRP, RSRQ, 测量, measur+, 窄带, narrowband, 导频, pilot, 资源, RB

**C. DOCUMENTS CONSIDERED TO BE RELEVANT**

| Category* | Citation of document, with indication, where appropriate, of the relevant passages | Relevant to claim No. |
|---|---|---|
| PX | CN 114040421 A (HUAWEI TECHNOLOGIES CO., LTD.) 11 February 2022 (2022-02-11) description, paragraphs 36-132 | 1-27 |
| X | NOKIA et al. "Correction to RSS based measurement requirements" *3GPP TSG-RAN4 Meeting #97-e R4-2017070*, 13 November 2020 (2020-11-13), sections 4.7.2.1.1-4.7.2.2.2 and 8.13.2.1-8.13.3.1 | 1-27 |
| X | QUALCOMM INC. "Time synchronization assumption for RSS-based neighbor cell measurements" *3GPP TSG-RAN4 Meeting #99-e R4-2109869*, 27 May 2021 (2021-05-27), sections 4.7.2.1.2-4.7.2.2.2 and 8.13.2.1-8.13.3.1 | 1-27 |
| A | HUAWEI et al. "Use of RSS for measurement improvements" *3GPP TSG-RAN WG2 Meeting #108 R2-1915537*, 22 November 2019 (2019-11-22), entire document | 1-27 |
| A | CN 112821929 A (HUAWEI TECHNOLOGIES CO., LTD.) 18 May 2021 (2021-05-18) entire document | 1-27 |
| A | WO 2021057232 A1 (DATANG MOBILE COMMUNICATIONS EQUIPMENT CO., LTD.) 01 April 2021 (2021-04-01) entire document | 1-27 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 October 2022** | **26 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/119965**

| Patent document cited in search report | | | Publication date (day/month/year) | Patent family member(s) | | | Publication date (day/month/year) |
|---|---|---|---|---|---|---|---|
| CN | 114040421 | A | 11 February 2022 | None | | | |
| CN | 112821929 | A | 18 May 2021 | WO | 2021098355 | A1 | 27 May 2021 |
| WO | 2021057232 | A1 | 01 April 2021 | EP | 4037226 | A1 | 03 August 2022 |
| | | | | CN | 112583553 | A | 30 March 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111161581